# EUROPEAN PATENT SPECIFICATION

(11) **EP 3 729 752 B1**
(45) Date of publication and mention of the grant of the patent: **28.09.2022**
(21) Application number: 18829450.8
(22) Date of filing: 19.12.2018
(51) Int. Cl.: H04L 47/22

(54) **DATA COMMUNICATION**
DATENKOMMUNIKATION
COMMUNICATION DE DONNÉES

(30) Priority: 22.12.2017 GB 201721779
(43) Date of publication of application: 28.10.2020
(73) Proprietor: TransPacket AS, 0378 Oslo (NO)
(72) Inventor: BJØRNSTAD, Steinar, 0378 Oslo (NO)
(74) Representative: Dehns
(86) International application number: PCT/GB2018/053697
(87) International publication number: WO 2019/122881

(56) References cited:
- WO-A1-2007/003999
- Ryousei Takano ET AL: "Design and evaluation of precise software pacing mechanisms for fast long-distance networks", IEICE Transactions on Communications, 1 January 2011 (2011-01-01), pages 2199-2207, XP055562107, DOI: 10.1587/transcom.E94.B.2199 Retrieved from the Internet: URL:http://citeseerx.ist.psu.edu/viewdoc/d ownload;jsessionid=C6D6983D82F9482BCD790A6 5AD9E29CE?doi=10.1.1.107.9489&rep=rep1&typ e=pdf

## Description

### BACKGROUND OF THE INVENTION

This invention relates to network-based communication methods and apparatus.

It is known to seek to lower the delay (latency) in packet switched networks-preferably, to below one millisecond. This is driven by a large range of applications including: industrial applications such as controlling robots; automotive applications such as autonomous cars; inter- and intra-datacentre communication; live television broadcast; and telecoms applications such as mobile fronthaul. The desirability of controlling the variation in the delay experienced by successive packets as they travel across a network has also been recognised. This Packet Delay Variation (PDV) is the difference between the maximum network delay and the minimum network delay. A high PDV can have negative impacts in many timing-critical applications. For example, it impacts the accuracy of the IEEE 1588 Precision Time Protocol (PTP), which is used for network synchronization. Receive-side buffering can be used to mitigate the effects of PDV, but this then impacts the total end-to-end delay for an application, which is given by the sum of the minimum delay across the network (given by the fastest packet) and the PDV. When time-stamped packets are transmitted across a network, with the time-stamps being used to clock the packets out at the receiver side according to the time-stamp, the PDV across the network determines the minimum size of the buffer that is needed at the receive side to ensure the clocking out can be performed reliably.

Time-stamped packets are used in various contents, including video-streaming and pseudowire emulation (the emulation of a point-to-point connection over a packet-switching network). In telecommunications, mobile fronthaul networks use time-stamped packets to transfer timing-sensitive information (IQ-data) as described in the IEEE 1914.3 standardization draft.

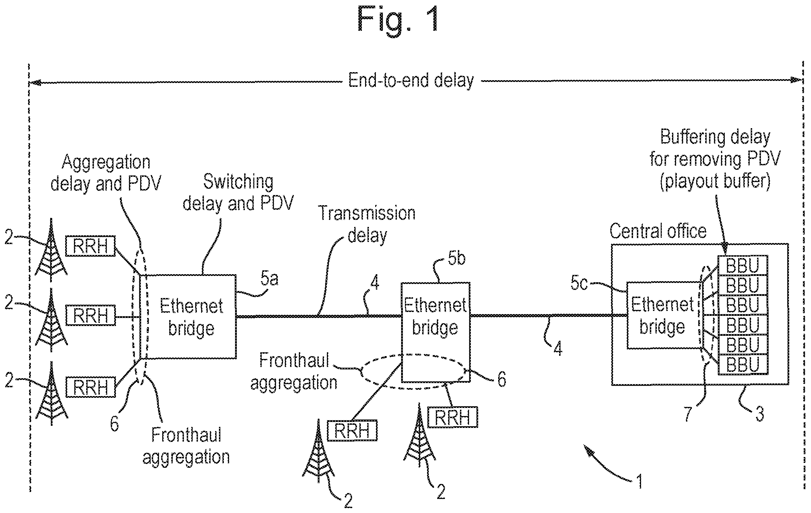

By way of example, Figure 1 illustrates sources of delay and PDV in a typical mobile telecommunications fronthaul network 1. A fronthaul network 1 is the part of a centralised radio access network that connects radio masts, known as remote radio heads (RRH) 2, situated at the edge of the cellular network, to a set of baseband units (BBU) located at a central office 3. It comprises links 4 (which may be fibre or microwave or copper-wire, or a mixture of these) and Ethernet bridge units 5a, 5b, 5c. Of course, in practice, there may be many more links and bridge units. There may be muxponders, IP or MPLS routers, or any other appropriate network nodes. In this example, the Ethernet bridge units 5a, 5b closest to the RRHs 2 are each shown as aggregating multiple inputs from respective RRHs 2 onto a fibre or microwave link 4. This aggregation is represented by the dashed regions 6. Packet delay, and packet delay variation (PDV), are typically introduced by these aggregation processes, and also by other switching operations of the bridge units 5. The links 4 themselves also introduce delays, but usually uniformly so.

In order to smooth out the delay variation at the central office side, the aggregating Ethernet bridges 5a, 5b output time-stamped packets. These are received by the Ethernet bridge 5c at the central office 3, which buffers the packets in a playout buffer 7. From here the packets are played out according to the values in their time-stamps. However, a large playout buffer 7 is undesirable as it introduces greater overall latency. The minimum size of the playout buffer 7 necessary for achieving a fixed playout rate is determined by the end-to-end PDV across the fronthaul network 1. The playout buffer 7 adds a fixed delay according to the size of the buffer 7. Hence, it is desirable for the PDV due to transmission through the network 1 to be kept as low as possible, in order to minimise the size of the playout buffer 7.

A similar desire to minimise PDV applies in other contexts also, including the industrial, automotive, datacentre, and broadcast examples mentioned above.

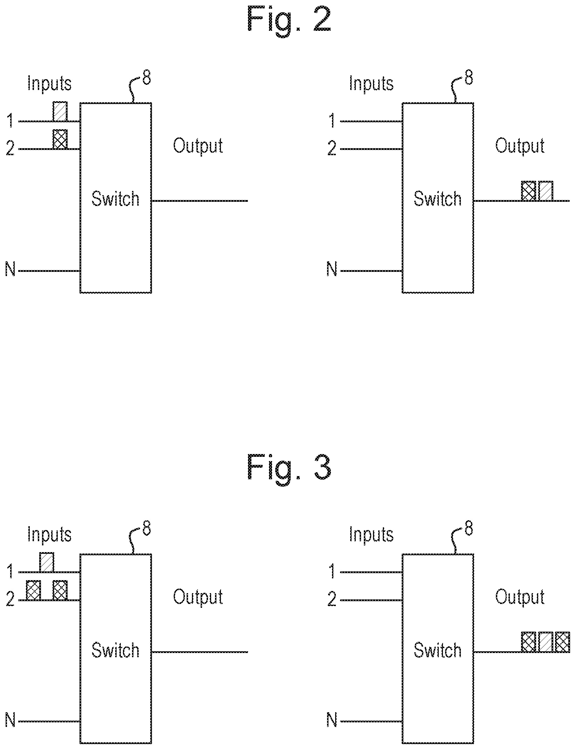

There are several factors that can cause switches to impose PDV on packet streams. Normally, the most prominent factor is contention, when more than one packet is simultaneously scheduled for the same output from a switch. If packets are buffered for a variable time, in order to overcome this contention, this causes PDV on the packet stream. This is illustrated in Figure 2, which shows a switch 8 that has N inputs and one output. If a first packet arrives on a first input at exactly the same time as a second packet arrives at a second input, as shown on the left of Figure 2, then the switch 8 must delay one of the packets relative to the other, as has happened to the first packet, shown on the right of Figure 2.

Furthermore, there can be design-dependent processes within a switch that may cause PDV depending on how the switch is implemented. One example of this is the conversion of data streams between different clock domains. Another common source of PDV is when a switch converts bitstreams from serial to parallel for internal parallel processing within the switch-e.g. in an FPGA-before serialising the bitstreams again for outputting. A further example is when switches use so-called alignment-markers for measuring the delays of parallel wires in parallel interfaces, where the inserting of the alignment markers may cause PDV. While contention typically induces PDV corresponding to the duration of one or more packets, design-dependent factors typically induce PDV corresponding only to a fraction of the duration of one packet. This is illustrated in Figure 3, which shows a switch 9 that has N inputs and one output. On the left of Figure 3, a first packet arrives on the first input during a gap between two packets that are received on the second input. The gap between the two packets is exactly the duration of the first packet. However, when the packets are output from the switch 9, as shown on the right of Figure 3, the gap between the two packets received on the second input has widened, due-for example-to the clock domains of the inputs and output not being synchronised and/or other factors. The interval is now longer than the duration of the first packet, such that there is a gap between the earlier packet received on the second input and the first packet, which would not ideally be present. This change to the inter-packet spacing, introduced by the switch 9, results in PDV between the packets.

Hence delay and PDV can be affected by contention between packet streams and by mechanisms that depends on the design of network components.

A particular challenge for a network operator, when seeking to improve a network so as to reduce PDV, is that it is not typically practicable or economic to replace all the network components (bridges, switches, routers, etc.) in its existing networks. An operator may lease part of the network from a third-party provider, and so have no direct control over the components through which the operator's traffic passes. Even if the entire network is under the operator's control, upgrading the entire network with components that introduce less PDV if often not affordable.

The present invention seeks to provide an alternative approach to reducing packet delay variation.

"Design and Evaluation of Precise Software Pacing Mechanisms for Fast Long-Distance Networks" (Takano et al.) discloses software pacing mechanisms at end nodes of communication paths.

WO 2007/003999 discloses apparatus and methods for transmitting real-time service data in a digital broadcast network, where gaps in the transmission are filled with non-real-time service data.

### SUMMARY OF THE INVENTION

From a first aspect, the invention provides a network-based communication method as claimed in claim 1.

From a second aspect, the invention provides a (source) network-based communication apparatus as claimed in claim 5.

From a third aspect, the invention provides a network-based communication system as claimed in claim 12.

The network-based communication system may further comprise said network link and/or a network comprising said network link. The system may comprise a plurality of network links and/or one or more intermediate network apparatuses located between the source network apparatus and the destination network apparatus. The destination network apparatus and/or the source network apparatus may be respective nodes in a network. The one or more network links and/or the one or more intermediate network apparatuses may be arranged to communicate the augmented stream of packets from the source network apparatus to the destination network apparatus.

In an implementation disclosed for reference purposes, the invention provides a (destination) network-based communication apparatus configured to:
receive an augmented stream of packets from a network link at an input of the destination network apparatus, the augmented stream of packets comprising a stream of information-bearing packets and further comprising spacer packets located between adjacent packets of the stream of information-bearing packets;
determine whether each received packet is an information-bearing packet or a spacer packet;
output or process the received information-bearing packets, or output or process information from the received information-bearing packets; and
discard the received spacer packets.

More generally, in another implementation disclosed for reference purposes, the invention provides a network-based communication method, comprising:
a source network apparatus receiving or generating a stream of information-bearing packets, the stream comprising gaps between at least some of the information-bearing packets;
the source network apparatus generating one or more spacer packets and outputting an augmented stream of packets to a network link from an output of the source network apparatus, the augmented stream of packets comprising the information-bearing packets and further comprising spacer packets located within at least some of said gaps;
the augmented stream of packets travelling through one or more network links between the source network apparatus and a destination network apparatus;
the destination network apparatus receiving the augmented stream of packets at an input of the destination network apparatus;
the destination network apparatus determining whether each received packet is an information-bearing packet or a spacer packet;
the destination network apparatus outputting or processing the received information-bearing packets, or outputting or processing information from the received information-bearing packets; and
the destination network apparatus discarding the received spacer packets.

Also, more generally, in another implementation disclosed for reference purposes, the invention provides a network-based communication system, comprising:
a source network apparatus; and
a destination network apparatus,
wherein the source network apparatus is configured to:
receive or generate a stream of information-bearing packets, the stream comprising gaps between at least some of the information-bearing packets; and
generate one or more spacer packets and to output an augmented stream of packets to a network link from an output of the source network apparatus, the augmented stream of packets comprising the information-bearing packets and further comprising spacer packets located within at least some of said gaps, and
wherein the destination network apparatus is configured to:
receive the augmented stream of packets at an input of the destination network apparatus;
determine whether each received packet is an information-bearing packet or a spacer packet;
output or process the received information-bearing packets, or output or process information from the received information-bearing packets; and
discard the received spacer packets.

Also, more generally, in another implementation disclosed for reference purposes, the invention provides a (source) network-based communication apparatus configured to:
receive or generate a stream of information-bearing packets, the stream comprising gaps between at least some of the information-bearing packets; and
generate one or more spacer packets and to output an augmented stream of packets to a network link from an output of the source network apparatus, the augmented stream of packets comprising the information-bearing packets and further comprising spacer packets located within at least some of said gaps.

Thus it will be seen that, in accordance with any of the various aspects of the invention disclosed above, spacer packets are inserted between information-bearing packets as they travel across the network between the source and destination network apparatuses. This is expected to result in reduced PDV for the information-bearing packets when used with typical existing networks. Many existing networks contain components, such as switches and routers, that do not preserve the inter-packet spacing (i.e., the sizes of the gaps) of a data stream passing through them, but unpredictably alter the gaps between the packets, thereby introducing PDV to the data stream. This can happen irrespective of whether the network is synchronised at the bit level. However, most common network components (bridges, switches, etc.) will normally only drop a packet if congestion results in a buffer overflow. So, by inserting spacer packets into the stream of information-bearing packets, to reduce or eliminate the gaps between packets, the network between the source network apparatus and the destination network apparatus can, in many instances, be induced to better preserve the inter-packet spacing of the stream of information-bearing packets, without requiring any modification to the intermediate network components. Only the source apparatus and the destination apparatus need be specially adapted to support the method.

The source network apparatus may be distributed over multiple units, but may be embodied in a single device. It may be an end node (e.g., having only one network input and/or only one network output), or a switch, bridge, router, multiplexer, demultiplexer, add/drop unit, a computer server acting as virtual router or switch, or any other network component or apparatus. It may comprise a plurality of network inputs and/or a plurality of network outputs. It may be configured to perform conventional switching, bridging, routing, multiplexing and/or demultiplexing operations, in addition to the novel generation of spacer packets as described herein.

Similarly, the destination network apparatus may be distributed over multiple units, but may be embodied in a single device. It may be an end node (e.g., having only one network input and/or only one network output), or a switch, bridge, router, multiplexer, demultiplexer, add/drop unit, a computer server acting as virtual router or switch, or any other network component or apparatus. It may comprise a plurality of network inputs and/or a plurality of network outputs. It may be configured to perform conventional switching, bridging, routing, multiplexing and/or demultiplexing operations, in addition to the novel identification and discarding of spacer packets as described herein.

The same apparatus may embody both a source network apparatus as disclosed herein (communicating with a remote destination network apparatus) and a destination network apparatus as disclosed herein (communicating with a remote source network apparatus)-e.g., being a bridge between multiple network links, which may have different line rates or be in different clock domains.

The network link may be an optical link, an electrical cable, a radio link, a microwave link, or any other appropriate link.

In one set of embodiments, rather than communicating over a geographically-distributed network, such as a telecommunications network, the system may be implemented within a single device-e.g., in a common housing and/or having a common power supply. In this case, the source network apparatus, the destination network apparatus (which is configured to receive the augmented stream of packets from the source network apparatus), and the network link are contained in the same device. The device may be an integrated circuit device (e.g., an ASIC or FPGA), or may comprise one or more connected circuit boards, or one or more electronic modules (boards) in a common chassis, containing the source network apparatus and the destination network apparatus. The network link could simply be one or more copper wires on a circuit board. The device may be a network-on-a-chip (NoC) device. The device may comprise a plurality of interconnected source and destination network apparatuses. However, in the simplest case, the source network apparatus may be configured to send an augmented packet stream only to the destination network apparatus, and the destination network apparatus may be configured to receive the augmented packet stream only from the source network apparatus. The network link may just be a point-to-point connection, such as a bus connecting the source apparatus to the destination apparatus, defining a simple network of two nodes and one link.

The source network apparatus and the destination network apparatus may comprise any number of inputs and outputs, which may be optical, electrical, radio, microwave, etc. Each apparatus may comprise any one or more of: processors, ASICs, FPGAs, volatile memory, non-volatile memory, electronic components, optical components, inputs, outputs, power supplies, etc. Each apparatus may implement some or all of the steps described herein using software instructions executed by one or more processors, or using hardware (e.g., FPGA and/or ASICs), or using a combination of the two. The network may be synchronous or asynchronous at the bit level. The source network apparatuses may be synchronised with the destination network apparatus (e.g., each having a respective clock running at the same frequency) or they may be unsynchronised. Note that a network can be unsynchronised at the packet level, even when it is synchronised at the bit level-e.g., as is the case with SyncE (synchronous Ethernet).

The augmented stream from the source network apparatus may be sent directly to the destination network apparatus-e.g., through a single fibre optical cable-or it may pass through a network comprising a plurality of network links and one or more intermediate network components, such as packet-switching nodes. Although a single link will not, itself, induce PDV, the source network apparatus and/or destination network apparatus may comprise interfaces or other components or modules that can induce PDV, the effects of which may be mitigated by embodiments of the present invention. For example, the source or destination network apparatus may comprise an Ethernet switch which may include a plug-in electro-optical interface module that causes PDV when converting packets between electrical to optical formats.

In one set of embodiments, the source network apparatus completely fills some gaps, or every gap, in the stream of information-bearing packets with spacer packets. However, this is not essential, and in another set of embodiments, the source network apparatus is configured to leave a gap between an information-bearing packet and a spacer packet, for at least one information-bearing packet and one spacer packet in the augmented stream of packets, and potentially between every packet in the augmented stream of packets. These gaps may be of constant size. Although only partially filling the gaps with spacer packets may result in some PDV as the augmented data stream is communicated over the network, the level of PDV may still be reduced compared with not inserting any spacer packets. Moreover, for some networks, it may be required to leave gaps between packets. For example, Ethernet mandates an interpacket gap of fixed duration. Also, the applicant has found that, for some network components, there is an optimal gap size between adjacent packets in the augmented data stream that causes the components to induce a minimum PDV, or no PDV; in some cases a larger or smaller gap can worsen performance.

The network may specify a minimum gap size (interpacket spacing). The source network apparatus may be configured to maximally fill some gaps, or every gap, with spacer packets (and/or with further information-bearing packets, as described below), subject to leaving a predetermined minimum gap between each successive packet in the augmented stream of packets. The network may specify a minimum packet size. In this case, the source network apparatus may maintain a gap from the original stream of information-bearing packets in the augmented packet stream where the gap is too small to contain a spacer packet of the minimum packet size (plus two gaps of minimum size, one either side of the spacer packet, where required). This may result in the augmented stream experiencing PDV up to the length of the gap that is left, but overall the system should still give rise to a substantial reduction in PDV for the stream. To give a concrete example, some Ethernet networks require a minimum packet size of 64 bytes, and a minimum gap between packets of 12 bytes. Therefore, it is not possible to insert a spacer packet in a gap of less than 88 bytes (64 + 2 x 12), so such gaps may be left alone by the source network apparatus. Alternatively, in some embodiments, the source network apparatus may intentionally reposition one of the information-bearing packets in the augmented data stream to widen such a gap (e.g., to increase the gap to exactly 88 bytes), so that a spacer packet can be inserted. This will result in PDV up to size of the repositioning, but in some situations this may be tolerable if it is less than the PDV that the network might induce if the gap were to be left in the augmented data stream.

When the gaps are completely filled, the augmented data stream effectively becomes a constant bit-rate (CBR) stream (i.e., the information-bearing packets and the spacer packets together occupy a constant amount of data per unit time). When the length of every gap between successive packets in the augmented data stream is of a constant size, the augmented data stream may again become a near constant bit-rate stream (or a constant bit-rate stream, if the gaps occur at regular intervals).

In general, it is expected that the source network apparatus will, when generating the augmented stream of packets, set the spacing between successive information-bearing packets in the augmented stream (i.e., the sizes of the intervals between the information-bearing packets) to be the same as the spacing the corresponding information-bearing packets had in the original stream of information-bearing packets. (Note, that there may still be some PDV in the actual augmented stream that is output from the source network apparatus-e.g., caused by limitations of the source network apparatus, such as non-uniform buffering in an electro-optical interface at the output of the source network apparatus). In most embodiments, therefore, each spacer packet will be no larger than a respective gap into which it is inserted. However, it may be the case, in some embodiments, that the source network apparatus is intentionally configured to move some information-bearing packets relative to other information-bearing packets when generating the augmented stream (e.g., by delaying the start of one information-bearing packet by a few bytes, and bringing forward the start of another information-bearing packet by a few bytes). If the destination network apparatus knows, or can determine, information representing such movement, the destination network apparatus can be configured to reverse the movement.

The gaps in the stream of information-bearing packets may contain gap data (e.g., predetermined gap bytes, which may be encoded where appropriate) or the gaps in the stream of information-bearing packets may be conveyed simply by an absence of data. This will depend on the protocol(s) used by the system. Similarly, if the augmented data stream still contains gaps, these may be conveyed using gap data, or by an absence of data, as appropriate. References herein to "gap bytes" should be understood as also encompassing "gap intervals" of appropriate durations more generally-e.g., in systems that do not use gap bytes to represent gaps.

The source network apparatus may comprise a clock, and the destination network apparatus may comprise a clock. These clocks may be synchronised by the network, but they may be unsynchronised. The network-based communication system may be an asynchronous system, or it may be synchronised at least at the bit level. In some embodiments, each of the information-bearing packets may comprise timing information, such as a time-stamp.

In some embodiments, the destination network apparatus may comprise a buffer for receiving packets from the augmented data stream. The destination network apparatus may be configured to use timing information relating to the received information-bearing packets to compensate for packet delay variation-for example, by outputting the received information-bearing packets, from an output of the destination network apparatus, at times that depend on time stamps in the packets. This allows the apparatus to correct for PDV. However, using spacer packets to reduce the amount of PDV that might be present can still be advantageous as it can allow the size of the buffer to be reduced, thereby reducing overall latency, as already explained.

In other embodiments, the destination network apparatus does not use time stamps to correct for PDV, and the received augmented stream may contain some PDV that can't be corrected. However, the insertion of spacer packets, according to methods of the present invention, can still reduce this PDV so as to provide better performance with PDV-sensitive applications.

The source network apparatus may receive the stream of information-bearing packets at an input to the source network apparatus-e.g., from an input network link, which may be an optical, electrical, radio or microwave link. Alternatively, it may be an end node. The source network apparatus may generate the stream of information-bearing packets. For example, it may comprise a video camera and may generate the stream of information-bearing packets by encoding video data from the video camera.

The destination network apparatus may comprise an output (e.g., an output to a further network link) for forwarding the received information-bearing packets onto a further network link. Alternatively, it may be an end node. The destination network apparatus may extract information from the information-bearing packets (e.g., from a payload portion) for consumption by the apparatus-e.g., for displaying a video stream encoded in the stream of information-bearing packets on a video screen of the apparatus.

In some embodiments, the source network apparatus is a component of a telecommunications fronthaul network. It may aggregate inputs from a plurality of remote radio heads (RRH). It may be an Ethernet bridge unit. The destination network apparatus may also be a component of the telecommunications fronthaul network. It may be a further Ethernet bridge unit. It may de-aggregate a plurality of signals from an incoming stream and output the plurality of signals to a respective plurality of baseband units.

The source network apparatus may be configured to generate spacer packets of arbitrary size-potentially up to a maximum size. The source network apparatus may comprise a spacer-packet generating module. The source network apparatus may determine the size of a gap between two of the information-bearing packets and may communicate data representing the size to the spacer-packet generating module, which may generate a spacer packet, or a plurality of spacer packets, having the communicated size.

In some embodiments, only one spacer packet is inserted into any one gap between an adjacent pair of the information-bearing packets. However, the network-based communication system, or the network link, may define a maximum size for the spacer packets-e.g., by specifying a MTU (maximum transmission unit) for every packet. This maximum size may, for some streams, be less than the largest gap in the stream of information-bearing packets received by the source network apparatus. The source network apparatus may therefore be configured to insert a plurality of spacer packets into a gap between two of the information-bearing packets (for at least one or more gaps). The source network apparatus may be configured to detect that a gap between insert a pair of the information-bearing packets is larger than a maximum size for the spacer packets, and may insert a plurality of spacer packets in a gap in response to detecting that the gap is larger than a maximum size for the spacer packets. The spacer packets may be spaced apart from each by a minimum or constant gap length, as already described.

The spacer packets may comprise a header portion and a data portion. They may have the same structure as the information-bearing packets. However, the spacer packets preferably contain only null data, at least in a data portion of each spacer packet-i.e., data that does convey any useful information, such as a repeated constant byte, or randomly-generated data or noise. In some embodiments, the spacer packets may contain meaningful information in a header portion of the spacer packets, in order to comply with a network protocol.

In some embodiments, the source network apparatus is configured to insert further information-bearing packets into gaps between adjacent packets of the stream of information-bearing packets. The augmented stream of packets may thus comprise: (i) the information-bearing packets; (ii) further information-bearing packets located between adjacent information-bearing packets of the stream of information-bearing packets; and (iii) spacer packets located between adjacent information-bearing packets of the stream of information-bearing packets. A gap between adjacent information-bearing packets of the stream of information-bearing packets, in the augmented data stream, may contain zero, one or more spacer packets and may also contain zero, one or more further information-bearing packets.

This approach can make more efficient use of the capacity of the network link than filling (partially or fully) the gaps only with generated spacer packets, which do not convey any useful data payload (i.e., useful information content) to the destination network apparatus.

The further information-bearing packets may be received or generated by the source network apparatus. The source network apparatus may comprise a first input for receiving the stream of information-bearing packets and a second input for receiving the further information-bearing packets. The further information-bearing packets may have a lower priority than the stream of information-bearing packets. For example, the further information-bearing packets may be statistically-multiplexed (SM) packets, while the stream of information-bearing packets may be a guaranteed service traffic (GST) stream. The concepts of SM and GST data are explained in the applicant's earlier patent, US 9,521,093, the entire contents of which are hereby incorporated by reference.

The destination network apparatus may be configured to output or process the further information-bearing packets of the received augmented data stream, or output or process information extracted from the further information-bearing packets.

The source network apparatus may comprise a memory for storing further information-bearing packets. The memory may be arranged to store the further information-bearing packets in a first-in-first-out queue, or so that a further information-bearing packets can be selected from a plurality of further information-bearing packets, or in any other appropriate format. The source network apparatus may be configured to insert a further information-bearing packet from the memory into a gap between two packets of the information-bearing packet stream when there is an available further information-bearing packet in the memory that will fit (wholly or partially) within the gap, and to insert a spacer packet into the gap only when no such further information-bearing packet is available. The gap between two packets of the information-bearing packet stream may already be partly filled with one or more further information-bearing packets or spacer packets when this decision is taken-the process may be repeated until each gap is optimally filled

More generally, the further information-bearing packets may be inserted by the source network apparatus with a higher priority than the spacer packets. It will be appreciated, however, that it will not always be possible to fill gaps optimally using only further information-bearing packets, since only a finite supply will be available, and typically not in all sizes, and so the ability to generate spacer packets of arbitrary size (potentially up to a maximum size) is still advantageous for reducing PDV as previously explained.

In some situations, it may be desirable to leave some gaps in the augmented stream of packets. This may be because it is mandated by a protocol on the network link (e.g., the interpacket gap in Ethernet). In this case, the source network apparatus may be configured not to completely fill the gaps between the information-bearing packets in the stream of information-bearing packets.

In some embodiments, the source network apparatus is configured to insert spacer packets having lengths such that there is a constant gap length after each packet (information-bearing packet and spacer packet) in the augmented stream of packets-e.g., a fixed number of gap bytes, or a fixed time interval. The destination network apparatus can advantageously use this feature to help further reduce or eliminate PDV between the source network apparatus and the destination network apparatus, by knowing the constant gap length introduced by the source network apparatus. The destination network apparatus may be configured to adjust the position of one or more packets in the received augmented stream of packets by increasing or decreasing a gap in the received augmented stream of packets so as to make the gap closer to, or equal to, the constant gap length, which is preferably a predetermined constant gap length created by the source network apparatus. In this way, any changes in the gap lengths introduced by the network, between the source network apparatus and the destination network apparatus, can be partly or fully corrected for, thus further reducing PDV. This is possible even without the nodes having to use time stamps and synchronised clocks.

Moreover, in some embodiments, the destination network apparatus may be configured to synchronise a clock of the destination network apparatus with a clock of the source network apparatus by analysing the received augmented stream. It may measure a data rate of the received augmented stream against the clock of destination network apparatus-e.g., by measuring the amount of packet data it receives over a fixed time period (the total packet length, not just the payloads, of the information-bearing packets and the spacer packets). It may determine a difference between a measured amount of data received and an expected value, which it may calculate or have preloaded. Alternatively, the destination network apparatus may compare a number of gap bytes received over a period of time against an expected number of gap bytes, based on the number of packets received over that time period (assuming the source network apparatus left a constant number of gap bytes between each packet). The destination network apparatus may adjust or calibrate its clock (e.g., generating calibration data) based on such an analysis. If the packet rate of the original information-bearing packet stream is not uniform, so that the rate of gaps in the augmented data stream is not constant, the destination network apparatus may be configured to correct the received augmented stream, by adjusting the gap lengths as described above, before analysing the stream-e.g., before measuring the data rate from the corrected received augmented stream. The destination network apparatus may use its calibrated clock when outputting the received information-bearing packets, or information extracted therefrom. If the destination network apparatus is also configured to insert spacer packets, a further downstream node may also synchronise its clock to the clock of the destination apparatus. In this way, it is possible to synchronise an entire network through the use of spacer packets.

In some embodiments, the source network apparatus is configured to divide a first packet of the stream of information-bearing packets into a plurality of smaller information-bearing packets, and include the plurality of smaller information-bearing packets (each being smaller than the first packet) in the augmented stream of data packets, instead of the first packet. The source network apparatus may so divide every packet of the stream of information-bearing packets that is larger than a constant size. The plurality of smaller information-bearing packets may all have said constant size. The source network apparatus may pad one or more of the smaller information-bearing packets so that it can be of the constant size.

Similarly, the source network apparatus may be configured to pad a second packet of the stream of information-bearing packets to create a padded information-bearing packet, and include the padded information-bearing packet (being larger than the second packet) in the augmented stream of data packets, instead of the second packet. The padding may be achieved by including null data in a data portion of the padded information-bearing packet. A predetermined marker value may be included to indicate the location of the null data. The source network apparatus may so pad every packet of the stream of information-bearing packets that is smaller than the constant size.

In this way, it is possible for the augmented stream of data packets to contain optimised information-bearing packets that are all of the same constant size. For some network components, this has been found to lead to reduced PDV. Spacer packets can then be included in the gaps between the optimised information-bearing packets. In some embodiments, the spacer packets are generated to as to leave a constant gap between adjacent packets in the augmented stream, such that both the packet sizes and the gaps between packets are optimal for reducing PDV.

In some embodiments, the network link may be able to receive packet fragments without this leading to an error. The source network apparatus may thus be configured to interrupt inserting a spacer packet if another information-bearing packet of the stream arrives at the source network apparatus. This can allow the source network apparatus to process the stream of information-bearing packets faster (with less buffering) than would otherwise be possible. The source network apparatus may be configured to delay all the incoming information-bearing packets by a constant delay to allow time to interrupt the insertion of a spacer packet (which may, for instance, require outputting a predefined interruption message onto the network link). In this way, the source network apparatus can avoid inducing PDV induced on the information-bearing packets.

The destination network apparatus may determine whether each received packet is an information-bearing packet or a spacer packet by any appropriate method. For example, the spacer packets may include a predetermined value-e.g., in a header portion of the spacer packets-which allows them to be distinguished from the information-bearing packets. This could be different EtherType values between the two packet types, or different MPLS tags, or different MAC addresses, or different source IP addresses, etc. Further information-bearing packets may similarly be distinguished from packets of the stream of information-bearing packets by being marked differently.

The destination network apparatus may perform any appropriate processing of the received information-bearing packets. It may input information from the received information-bearing packets (e.g., from a data payload portion of the received information-bearing packets) to a processor or other digital logic module of the destination network apparatus.

The destination network apparatus may discard the spacer packets by overwriting a region of memory that contains the spacer packets, or in any other appropriate way. The destination network apparatus is preferably configured not to output any information from the received spacer packets, or at least not from the data portions of the received spacer packets. It is preferably configured not to input any data from the data portions of the received spacer packets to any processor of the destination network apparatus.

Features of any aspect or embodiment described herein may, wherever appropriate, be applied to any other aspect or embodiment described herein. Where reference is made to different embodiments or sets of embodiments, it should be understood that these are not necessarily distinct but may overlap.

### BRIEF DESCRIPTION OF THE DRAWINGS

Certain preferred embodiments of the invention will now be described, by way of example only, with reference to the accompanying drawings, in which:
Figure 1 is a schematic diagram of a mobile fronthaul network;
Figure 2 is a schematic diagram of a network switch, before and after processing incoming packets, where contention is present;
Figure 3 is a schematic diagram of a network switch, before and after processing incoming packets, that introduces PDV;
Figure 4 is a schematic diagram of a system embodying the invention, comprising a source switch and a destination switch;
Figure 5 is a flow diagram of steps performed by the source switch;
Figure 6 is a flow diagram of steps performed by the destination switch;
Figure 7 is a schematic diagram of a further system embodying the invention, in which lower-priority packets are inserted in addition to spacer packets;
Figure 8 is a schematic diagram of a further system embodying the invention, in which data packets are fragmented;
Figure 9 is a schematic diagram of an apparatus embodying the invention, which can fill gaps with spacer-packet fragments;
Figure 10 is a schematic diagram of a further system embodying the invention, using pre-defined gap sizes;
Figure 11 is a schematic diagram of the system of Figure 10 configured to regain frequency synchronisation;
Figure 12 is a schematic diagram of a device embodying the invention, which converts between two bitrates; and
Figure 13 is a schematic diagram of further system embodying the invention that aggregates and de-aggregate multiple streams.

### DETAILED DESCRIPTION

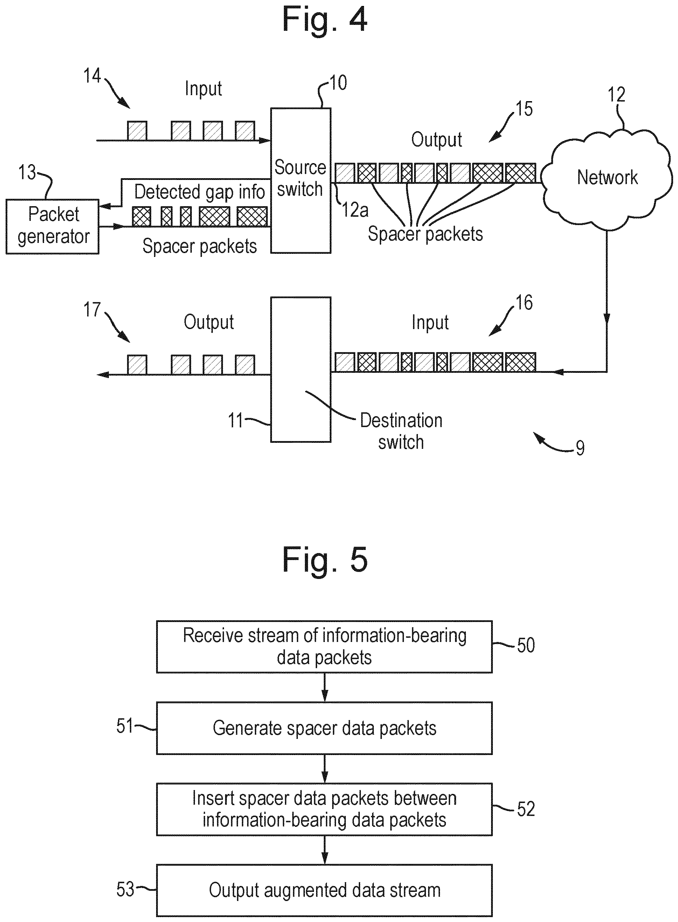

Figure 4 shows a communication system 9 embodying the invention. It includes a source network switch 10 and a destination network switch 11 that are connected by a packet-switching network 12. The system 9 may be an asynchronous system, with each node having a respective unsynchronized clock, or it may be synchronous at the bit level. A network link 12a of the network 12 is connected to an output of the source network switch 10. The network 12 could merely be a point-to-point connection, such as a single fibre optic cable. However, more typically, the network 12 comprises multiple links, which may include any of electrical links, fibre links, microwave links, terrestrial radio links, satellite radio links, etc., and multiple intermediate switches, bridges, routers, multiplexers, demultiplexers, and/or other network components, and of which may be a potential source of packet delay variation (PDV).

It will be appreciated that the terms "source" and "destination" are used merely as convenient labels for the present description; there may be an ultimate source or an ultimate destination for the data, beyond these switches; also, the source network switch 10 may also act as a destination for other packets, and the destination switch 11 may act as a source for other packets.

The source switch 10 is connected to a spacer-packet generator 13. This may physically be located alongside or within the source switch 10-e.g., in a common housing with the source switch 10-or it may be remote from the source switch 10-e.g., implemented as a separate unit, which may be connected to the source switch 10 by an electrical or optical cable.

In use, a stream 14 of information-bearing packets is received at an input to the source network switch 10. The source switch 10 may have other inputs, but only one is shown here to simplify the description. There is an inter-packet spacing in the stream 14-i.e., there are gaps between at least some pairs of adjacent packets in the stream 14. Each packet may be time-stamped, although this is not essential.

A gap-detection module within the source switch 10 identifies gaps between packets in the received stream 14, and sends data relating to the inter-packet spacing to the spacer-packet generator 13. The data may comprise the length of each detected gap. It may comprise information relating to a position of each of respective gap. For each gap, the spacer-packet generator 13 generates one or more spacer packets having an aggregate length equal to the gap. The spacer packets are normal packets, except that they contain a null data payload-for example, a repeated constant byte such as 0x00, or randomly-generated data or noise. They may include a particular value in packet header or body that marks them as spacer packets, such as a distinct EtherType value, so that the destination switch 11 can identify them as such.

The generated spacer packets are sent by the spacer-packet generator 13 to the source switch 10, which inserts them between the information-bearing packets as it schedules the information-bearing packets onto the network link 12a. Thus, the source switch 10 outputs an augmented data stream 15 in which all vacant gaps in the received data stream 14 are filled with spacer packets.

This augmented data stream 15 is transmitted through the network 12, which should apply only a constant delay to each packet of the augmented data stream 15, since it is effectively a constant bitrate stream. Unless the network 12 has to drop packets, only negligible PDV should be introduced to the augmented data stream 15 by its transmission through the network 12.

Figure 4 shows the augmented data stream 16 as it is received by the destination switch 11, which is, in this example, identical to the augmented data stream 15 as it was output by the source switch 10. The destination switch 11 determines whether each incoming packet is an information-bearing packet from the original stream 14, or a spacer packet, and discards the spacer packets. It may make this determination based on detecting a predetermined value in the header or body of each spacer packet. The destination switch 11 then outputs the received information-bearing packets from the augmented data stream 15 as an output data stream 17.

The scheduling of the information-bearing packets from the output of the destination switch 11 may be based on the positions they have within the augmented data stream 15 (i.e., relying on the spacer packets to preserve the inter-packet spacing of the original stream 14), or the destination switch 11 may schedule the output of each information-bearing packet based on a time-stamp within the packet, or based on timing information received by some other mechanism, such as in a special timing-information packet. However the scheduling is done, the output data stream 17 should, as far as possible, be an accurate representation of the original data stream 14, with the same inter-packet spacing-i.e., with no PDV having been introduced between the source network switch 10 and the destination network switch 11. Depending on the network protocol, the gaps between packets in the output data stream 17 may be filled with gap bytes (i.e., bytes having a reserved value denoting a gap), or they may be conveyed through an absence of data.

Figure 5 shows the main steps performed by the combination of the source network switch 10 and spacer-packet generator 13. At step 50, it receives the stream 14 of information-bearing packets. At step 51, it generates spacer packets, as required. At step 52, it inserts the spacer packets between the information-bearing packets, to form an augmented data stream 15. At step 53, it outputs the augmented data stream 15 onto the network link 12a.

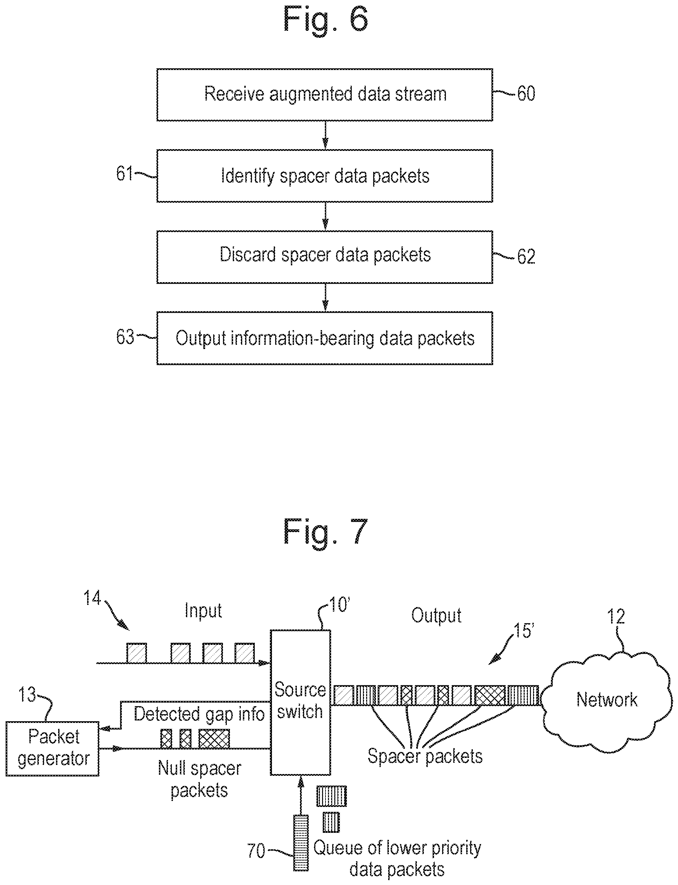

Figure 6 shows the main steps performed by the destination network switch 11. At step 60, it receives the augmented data stream 16 from the network 12. At step 61, it identifies the spacer packets. At step 62, it discards the spacer packets. At step 63, it outputs the information-bearing packets as an output stream 17.

It will be appreciated that these steps, while described sequentially, will in practice typically be performed repeatedly and concurrently, for successive respective packets, for as long as the streams continue flowing through the system 9.

Each of the source switch 10, spacer-packet generator 13, and destination switch 11 may be implemented using an appropriate combination of hardware and/or software.

Each may comprise any one or more of: processors, ASICs, DSPs, FPGAs, volatile memory, non-volatile memory, electronic components, optical components, inputs, outputs, power supplies, etc. Each may implement some or all of the steps described herein using software instructions executed by one or more processors, or using hardware (e.g., FPGA and/or ASICs), or using a combination of the two.

Returning to Figure 4, for the first large gap illustrated, ahead of the first packet shown in the original data stream 14 being received by the source switch 10, two spacer packets, each of maximum transmission unit (MTU) size are generated and inserted. Gaps less than the MTU are filled with smaller spacer packets. The spacer packets are inserted without imposing PDV on the data-packet stream 14.

Figure 7 shows an alternative embodiment of a source network switch 10' in which, for more efficient utilization of the bandwidth, instead of generating all the spacer packets with null data, information-bearing packets that have a lower priority than the original data-packet stream 14 are additionally used for some of the gap filling. A queue 70 of lower-priority packets is stored in a memory of the source switch 10'. The queue may be a first-in-first-out queue, or the switch 10' may, at any time, be able to access any of a plurality of the packets in the queue 70 (e.g., all the packets). These lower-priority packets may have been received at a second input (not shown) to the switch 10'.

For example, the original data-packet stream 14 may be a guaranteed service traffic (GST) stream and the spacers packets may include statistically multiplexed (SM) packets. The concepts of GST and SM data are introduced in the applicant's earlier patent, US 9,521,093.

The queue 70 of lower-priority packets will not always contain packets of the right size to completely fill a current gap in the incoming data stream 14. The switch 10' therefore also uses the spacer-packet generator 13 to generate null spacer packets which are inserted when there is no appropriate lower-priority packet to fill a gap. This could be a partial gap, left after one or more lower-priority packets have already been inserted between a pair of the information-bearing packets from the original data stream 14. Thus vacant packet gaps in the incoming data-packet stream 14 are filled with lower priority data-packets (e.g. SM packets) as a first choice, and with generated spacer packets as a second choice.

At a receiving node, any generated spacer packets are discarded, the lower-priority data-packets may be extracted and output or processed, while the original high-priority data-packet stream 14 can be regenerated and output with the original gaps between the data-packets.

In some situations, it is not necessarily desirable to completely fill the gaps between the information-bearing packets. This can be because the PDV generated in a network, or in a node, or a component in a node, sometimes depends on packet sizes and on the gaps between the packets.

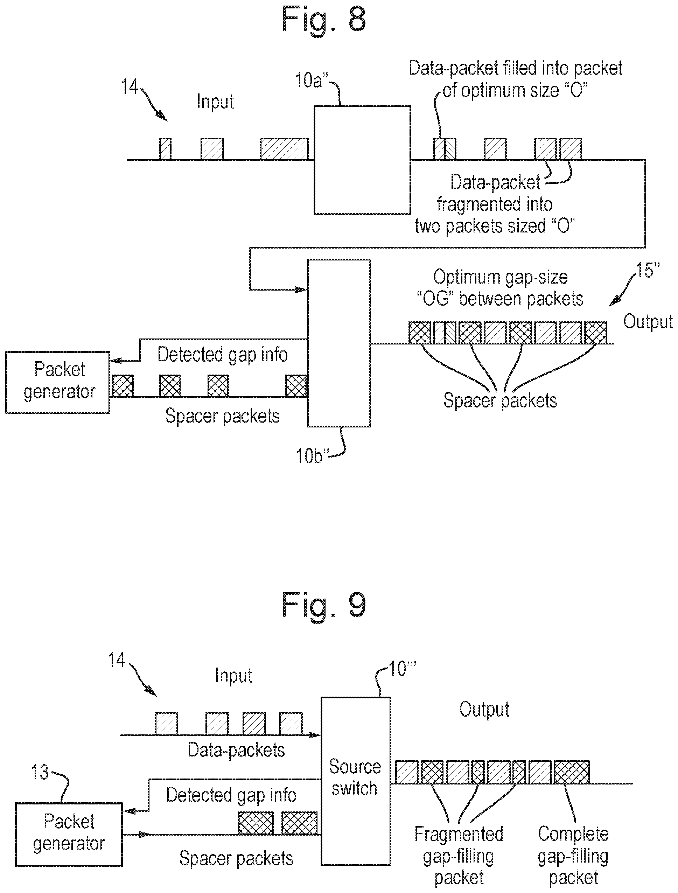

Figure 8 shows a source network switch 10" that contains a packet-optimising module 10a" and a gap-optimising module 10b", for addressing this situation. These modules may be embodied in a single device. This switch 10" aims to optimise the length of the packets it outputs in an augmented data stream 15" and to optimise gaps that are intentionally left between the packets in the augmented data stream 15", in order to minimise the PDV that the downstream network might otherwise introduce.

To generate an augmented packet stream 15" having a pattern of packet sizes and gaps that minimizes the PDV, the packet-optimising module 10a" converts the information-bearing packets of the received data stream 14 into packets that have an optimum packet size "O". If a packet in the data-stream 14 is larger than the optimum sized packet, it is fragmented into two or more packets of optimum size "O". When fragmenting, the packet being fragmented may not exactly fit into a whole number of optimally sized packets. Any remaining bytes may nevertheless be put into a packet of optimum size, with a predetermined indicator marking the end of the original packet that has been fragmented, and with the remaining bytes of the packet being left empty (e.g. having the value zero). For a packet shorter than the optimum packet size, the short packet may be filled into a larger packet of optimum size, again with an indicator marking the end of the short packet while the remaining bytes of the optimum sized packet are left empty (e.g. a series of bytes with value zero).

The converted packets are then sent to the gap-optimising module 10b". The gap-optimising module 10b" generates optimized packet gap sizes in the augmented packet stream 15". It uses generated spacer packets from the packet generator 13, as previously described, but the lengths of the generated spacer packets are specified by the gap-optimising module 10b" so as to achieve an optimized gap size "OG" for the gaps between the converted packets in the resulting augmented packet stream 15".

Figure 9 shows an embodiment of a source network switch 10‴ that is configured to fill gaps between received data-packets using fragmented spacer packets. This can allow very small gaps to be filled efficiently. If only complete packets of a pre-defined minimum size are allowed in the system, small gaps between data-packets may be too small to be filled with a generated spacer packet. Allowing packet fragments in the system can allow smaller gaps between data-packets to be filled which could not otherwise have been filled. Hence, a more efficient spacer may be achieved in some situations, such as when the received data stream 14 consists of a heavily-loaded packet stream with smaller gaps between the information-bearing packets than the minimum-sized packet allowed in the system.

The source network switch 10‴ may start inserting a generated spacer packet immediately whenever a predefined minimum gap-size is detected in the received packet stream 14. When using gap detection and gap filling where only complete packets (having a minimum size) are allowed in the system, it is necessary for a source network switch first to detect a gap of suitable size for a complete spacer packet to be inserted before inserting the spacer packet. However, when the system allows fragmented packets, insertion of a spacer packet may be started immediately without first looking for a gap of suitable size if immediate termination of the spacer packet insertion is possible on the arrival of a packet. Allowing spacer packet fragments in the system therefore allows the insertion of the spacer packets to start earlier than if only complete packets are allowed in the system.

A termination or fragmenting of a spacer packet may be performed using, for example, a pre-emption method as described in IEEE 802.1Qbu. It might be that a pre-defined minimum time is required for terminating a spacer packet. In this case, each incoming packet may be delayed by a fixed amount so that a spacer packet can be terminated sufficiently long before the packet needs to be scheduled onto the output.

For a bypassing packet stream of, e.g., 10 Gb/s, spacer packets of suitable size for filling gaps between data-packets completely, or leaving only a fixed gap between adjacent packets, may be generated and inserted as already described. As a result, when the packet stream including the spacer packets is transmitted through the network, the stream is effectively a constant data-rate stream, since any gaps that remain are of known length. When receiving the packets at the destination network switch, there may be a variation in the number of blank gap-bytes between packets if the packet stream has been subject to packet delay variation in the network. If the number of blank gap-bytes between all packets at the transmit side is predefined, this information may be used at the receiver side for reconstructing the original packet stream. The receiver may then first buffer the incoming packets and then send or play the packets out from the buffer again with the predefined number of blank gap-bytes between the packets. The packet-stream may then be restored as before it was subject to PDV.

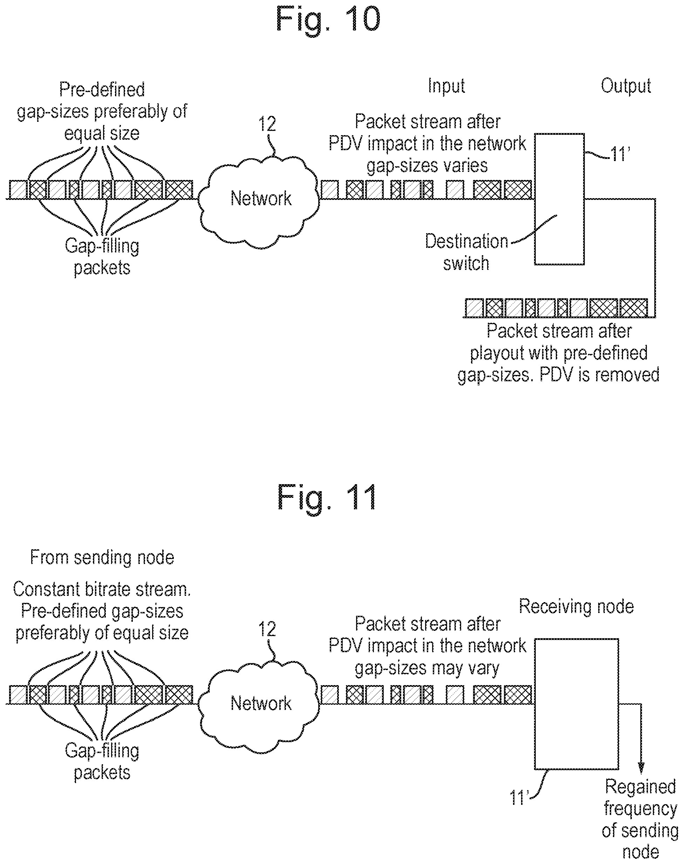

Figure 10 shows a destination network switch 11' implementing this method to remove PDV.

Whenever there is a long-term deviation in the number of gap bytes received, compared with an expected number of gap bytes for the number of packets received, over a time period, this indicates a frequency difference between the source switch and the destination switch. If the destination switch is running at a higher frequency, too few gap bytes will be found between the packets it receives compared with the pre-defined number of gap bytes output at the source switch. Conversely, if the destination switch runs at a lower frequency, too many gap bytes will be found between the packets it receives compared with the pre-defined number output by the source switch.

By monitoring the number of gap bytes at the destination switch and comparing this with the pre-defined number of gap bytes that were used when generating the augmented data stream at the source switch, the frequency deviation between the source switch and the destination switch may be calculated.

Figure 11 shows a destination switch 11' that performs this calculation. Using this information the destination switch 11' may frequency-synchronize any forwarding of the information-bearing packets it receives, ensuring that the packets are forwarded by the destination switch 11' with the same frequency as they were transmitted by the source switch (not shown). Furthermore the destination switch 11" may use the information about the received frequency to synchronize an internal clock of the destination switch 11' with a clock of the source switch.

Similarly, if a near constant bitrate stream is generated at the source switch, by inserting spacer packets, the data rate of the packets may itself be used by a destination switch for regaining the frequency of the source switch. At the receiver side, by monitoring the bitrate of the arriving packets, a frequency corresponding to the bitrate of the packets transmitted by the sender may be regenerated at the destination switch.

In general, as already explained, a packet generator may generate a spacer packet of suitable size to fill each gap optimally. An optimal filling will typically provide a minimum or constant number of gap bytes between adjacent packets in the augmented data stream.

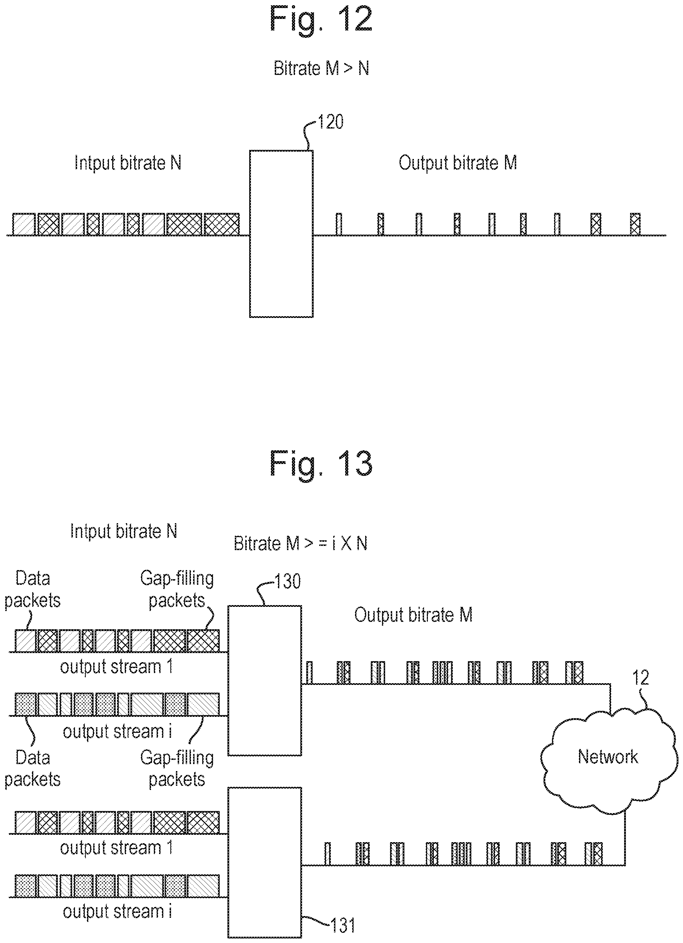

Figure 12 shows a muxponder 120 which receives a stream of information-bearing packets and spacer packets on a line having a line rate of 100 Mb/s. The stream may have been generated as described above, with a fixed-length gap between each successive packet (e.g., of 12 gap bytes). The muxponder 120 transmits the received packets over a 1 Gb/s output link. Additional data streams (not shown) may optionally be aggregated the received stream. The gaps between the 100 Mb/s packets in the 1 Gb/s link are expanded by a factor of ten, corresponding to the ten-fold increase in line rate.

This illustrates a more general principal that, when packets in the lower bitrate link of bitrate N (e.g. 100 Mb/s) are converted to a link of higher bitrate M (e.g. 1 Gb/s), the time between the packets may be preserved, resulting in an expansion in the number of gap bytes by the factor M/N.

A destination node may convert the received packet stream back down to the original 100 Mb/s line rate. When doing this, it can correct for an PDV by reducing the gaps between the packets back to the predetermined fixed-length gap size, as previously described with reference to Figure 10.

Figure 13 addresses a situation in which multiple packet streams, having the same priority, are first aggregated into a single higher-bitrate stream and then de-aggregated again to the individual streams. Conventionally, aggregation and de-aggregation can itself introduce PDV may occur. Furthermore, if the aggregated streams are transmitted through a network, the network may impose PDV on the packet streams.

Figure 13 shows a multiplexer 130 and a demultiplexer 131, embodying the present invention, which are connected by a network 12. Using the spacer packet methods described above, a fixed delay, with no PDV, may be achieved on the individual packet streams after aggregation/de-aggregation and transmission through the network 12. The network 12 could be a fibre optic cable, or a packet-switched network. So long as the bitrate of the aggregated stream is greater or equal to the sum of the bitrates of the streams to be aggregated, including the spacer packets, the individual packet streams can be filled with spacer packets before being aggregated (fully, or so as to leave a constant gap between adjacent packets). The multiplexer 130 can then multiplex the streams with information-bearing packets and spacer packets from other streams into a common aggregated stream.

At the demultiplexer 131, the individual streams may then be de-aggregated and reconstructed based on the knowledge of a maximum number of gap bytes between information-bearing packets and spacer packets. The spacer packets may then be removed by the demultiplexer 131 and the same method as described with reference to Figure 10 above may be applied by the demultiplexer 131 to reconstruct the stream without PDV.

It will be appreciated by those skilled in the art that the invention has been illustrated by describing one or more specific embodiments thereof, but is not limited to these embodiments; many variations and modifications are possible, within the scope of the accompanying claims.

## Claims

1. A network-based communication method, comprising:
a source network apparatus (10, 13) receiving a stream (14) of information-bearing packets, the stream comprising gaps between at least some of the information-bearing packets;
the source network apparatus generating one or more spacer packets and generating an augmented stream (15) of packets, the augmented stream of packets comprising the information-bearing packets and further comprising spacer packets located within at least some of said gaps;
the source network apparatus outputting the augmented stream of packets to a network (12a) link from an output of the source network apparatus;
the augmented stream of packets travelling through one or more network links between the source network apparatus and a destination network apparatus (11);
the destination network apparatus receiving the augmented stream of packets at an input of the destination network apparatus;
the destination network apparatus determining whether each received packet is an information-bearing packet or a spacer packet;
the destination network apparatus outputting or processing the received information-bearing packets (17), or outputting or processing information from the received information-bearing packets; and
the destination network apparatus discarding the received spacer packets;
**characterised by**:
the source network apparatus generating the augmented stream of packets such that the spacing of the information-bearing packets in the augmented stream is the same as the spacing of the corresponding information-bearing packets in the received stream of information-bearing packets.

2. A network-based communication method as claimed in claim 1, comprising the source network apparatus (10, 13) generating spacer packets having lengths such that there is a constant-sized gap between every packet in the generated augmented stream (15) of packets.

3. A network-based communication method as claimed in claim 1 or 2, comprising the source network apparatus (10, 13) inserting further information-bearing packets, received or generated by the source network apparatus, into gaps between adjacent packets of the stream (14) of information-bearing packets, such that the augmented stream (15) of packets comprises: i) the information-bearing packets; ii) further information-bearing packets located between adjacent information-bearing packets of the stream of information-bearing packets; and iii) spacer packets located between adjacent information-bearing packets of the stream of information-bearing packets.

4. A network-based communication method as claimed in any preceding claim, comprising the source network apparatus (10, 13) dividing each packet of the stream (14) of information-bearing packets that is larger than a predetermined constant size into a plurality of smaller information-bearing packets, and padding any of the smaller information-bearing packets that are less than the predetermined constant size to have the predetermined constant size, wherein the plurality of smaller information-bearing packets all have the predetermined constant size after any such padding, and including the plurality of smaller information-bearing packets in the augmented stream (15) of data packets.

5. A network-based communication apparatus (10, 13) configured to:
receive a stream (14) of information-bearing packets, the stream comprising gaps between at least some of the information-bearing packets;
generate one or more spacer packets and to generate an augmented stream (15) of packets, the augmented stream of packets comprising the information-bearing packets and further comprising spacer packets located within at least some of said gaps; and
output the augmented stream of packets to a network link (12a) from an output of the network-based communication apparatus;
**characterised in that**:
the apparatus is configured to generate the augmented stream of packets such that the spacing of the information-bearing packets in the augmented stream is the same as the spacing of the corresponding information-bearing packets in the received stream of information-bearing packets.

6. A network-based communication apparatus (10, 13) as claimed in claim 5, configured to completely fill every gap in the stream (14) of information-bearing packets with one or more spacer packets when generating the augmented stream (15) of packets.

7. A network-based communication apparatus (10, 13) as claimed in claim 5, configured to generate spacer packets having lengths such that there is a constant-sized gap between every packet in the generated augmented stream (15) of packets.

8. A network-based communication apparatus (10, 13) as claimed in any of claims 5 to 7, configured to insert further information-bearing packets, received or generated by the apparatus, into gaps between adjacent packets of the stream (14) of information-bearing packets, such that the augmented stream (15) of packets comprises: i) the information-bearing packets; ii) further information-bearing packets located between adjacent information-bearing packets of the stream of information-bearing packets; and iii) spacer packets located between adjacent information-bearing packets of the stream of information-bearing packets.

9. A network-based communication apparatus (10, 13) as claimed in claim 8, configured to insert a further information-bearing packet from a memory into a gap between two packets of the information-bearing packet stream when there is an available further information-bearing packet in the memory that will fit within the gap, and to insert a spacer packet into the gap only when no such further information-bearing packet is available.

10. A network-based communication apparatus (10, 13) as claimed in any of claims 5 to 9, configured to divide each packet of the stream (14) of information-bearing packets that is larger than a predetermined constant size into a plurality of smaller information-bearing packets, and to pad any of the smaller information-bearing packets that are less than the predetermined constant size to have the predetermined constant size, wherein the plurality of smaller information-bearing packets all have the predetermined constant size after any such padding, and to include the plurality of smaller information-bearing packets in the augmented stream (15) of data packets.

11. A network-based communication apparatus (10, 13) as claimed in any of claims 5 to 10, further configured to pad each packet of the stream (14) of information-bearing packets that is smaller than a predetermined constant size to create a padded information-bearing packet, and include the padded information-bearing packets in the augmented stream (15) of data packets.

12. A network-based communication system (9), comprising:
a source network-based communication apparatus (10, 13) as claimed in any of claims 5 to 11; and
a destination network apparatus (11),
wherein the destination network apparatus is configured to:
receive the augmented stream (15) of packets at an input of the destination network apparatus;
determine whether each received packet is an information-bearing packet or a spacer packet;
output or process the received information-bearing packets (17), or output or process information from the received information-bearing packets; and
discard the received spacer packets.

13. A network-based communication system (9) as claimed in claim 12, wherein each of the information-bearing packets comprises timing information, and wherein the destination network apparatus comprises a buffer and is configured to buffer the augmented stream (15) of packets and use the timing information to compensate for packet delay variation when outputting or processing the received information-bearing packets (17), or when outputting or processing information from the received information-bearing packets.

14. A network-based communication system (9) as claimed in claim 12 or 13, wherein the destination network apparatus (11) is configured to adjust the position of one or more packets in the received augmented stream (15) of packets by increasing or decreasing gaps in the received augmented stream of packets so as to make the gaps closer to, or equal to, a predetermined constant gap length.

15. A network-based communication system (9) as claimed in any of claims 12 to 14, wherein the source network-based communication apparatus (10, 13) comprises a clock, the destination network apparatus (11) comprises a clock, and the destination network apparatus is configured to synchronise the clock of the destination network apparatus with the clock of the source network-based communication apparatus by analysing the received augmented stream (15).

## Patentansprüche

1. Netzwerkbasiertes Kommunikationsverfahren, umfassend:
eine Quellnetzwerkeinrichtung (10, 13), die einen Strom (14) von informationstragenden Paketen empfängt, wobei der Strom Lücken zwischen zumindest manchen der informationstragenden Pakete umfasst;
die Quellnetzwerkeinrichtung ein oder mehrere Abstandhalterpakete erzeugt und einen erweiterten Strom (15) von Paketen erzeugt, wobei der erweiterte Strom von Paketen die informationstragenden Pakete umfasst und weiter Abstandhalterpakete umfasst, die innerhalb zumindest mancher der Lücken liegen;
die Quellnetzwerkeinrichtung den erweiterten Strom von Paketen an eine Netzwerk- (12a) -verbindung von einem Ausgang der Quellnetzwerkeinrichtung ausgibt;
der erweiterte Strom von Paketen durch eine oder mehrere Netzwerkverbindungen zwischen der Quellnetzwerkeinrichtung und einer Zielnetzwerkeinrichtung (11) läuft;
die Zielnetzwerkeinrichtung den erweiterten Strom von Paketen bei einem Eingang der Zielnetzwerkeinrichtung empfängt;
die Zielnetzwerkeinrichtung ermittelt, ob jedes empfangene Paket ein informationstragendes Paket oder ein Abstandhalterpaket ist;
die Zielnetzwerkeinrichtung die empfangenen informationstragenden Pakete (17) ausgibt oder verarbeitet, oder Informationen von den empfangenen informationstragenden Paketen ausgibt oder verarbeitet; und
die Zielnetzwerkeinrichtung die empfangenen Abstandhalterpakete verwirft;
**gekennzeichnet durch**:
die Quellnetzwerkeinrichtung, die den erweiterten Strom von Paketen derart erzeugt, dass die Beabstandung der informationstragenden Pakete in dem erweiterten Strom dieselbe wie die Beabstandung der entsprechenden informationstragenden Pakete in dem empfangenen Strom von informationstragenden Paketen ist.

2. Netzwerkbasiertes Kommunikationsverfahren nach Anspruch 1, umfassend, dass die Quellnetzwerkeinrichtung (10, 13) Abstandhalterpakete erzeugt, die derartige Längen aufweisen, dass es eine konstant große Lücke zwischen jedem Paket in dem erzeugten erweiterten Strom (15) von Paketen gibt.

3. Netzwerkbasiertes Kommunikationsverfahren nach Anspruch 1 oder 2, umfassend, dass die Quellnetzwerkeinrichtung (10, 13) weitere informationstragende Pakete, die von der Quellnetzwerkeinrichtung empfangen oder erzeugt werden, in Lücken zwischen angrenzenden Paketen des Stroms (14) von informationstragenden Paketen derart einsetzt, dass der erweiterte Strom (15) von Paketen umfasst: i) die informationstragenden Pakete; ii) weitere informationstragende Pakete, die zwischen angrenzenden informationstragenden Paketen des Stroms von informationstragenden Paketen liegen; und iii) Abstandhalterpakete, die zwischen angrenzenden informationstragenden Paketen des Stroms von informationstragenden Paketen liegen.

4. Netzwerkbasiertes Kommunikationsverfahren nach einem vorstehenden Anspruch, umfassend, dass die Quellnetzwerkeinrichtung (10, 13) jedes Paket des Stroms (14) von informationstragenden Paketen, das größer als eine vorgegebene konstante Größe ist, in eine Vielzahl von kleineren informationstragenden Paketen teilt und alle der kleineren informationstragenden Pakete, die kleiner als die vorgegebene konstante Größe sind, ausstaffiert, um die vorgegebene konstante Größe aufzuweisen, wobei die Vielzahl von kleineren informationstragenden Paketen alle die vorgegebene konstante Größe nach jeglichem solchen Ausstaffieren aufweisen, und die Vielzahl von kleineren informationstragenden Paketen in dem erweiterten Strom (15) von Datenpaketen beinhaltet.

5. Netzwerkbasierte Kommunikationseinrichtung (10, 13), konfiguriert zum:
Empfangen eines Stroms (14) von informationstragenden Paketen, wobei der Strom Lücken zwischen zumindest manchen der informationstragenden Pakete umfasst;
Erzeugen eines oder mehrerer Abstandhalterpakete und Erzeugen eines erweiterten Stroms (15) von Paketen, wobei der erweiterte Strom von Paketen die informationstragenden Pakete umfasst und weiter Abstandhalterpakete umfasst, die innerhalb zumindest mancher der Lücken liegen; und
Ausgeben des erweiterten Stroms von Paketen an eine Netzwerkverbindung (12a) von einem Ausgang der netzwerkbasierten Kommunikationseinrichtung;
**dadurch gekennzeichnet, dass**:
die Einrichtung konfiguriert ist, den erweiterten Strom von Paketen derart zu erzeugen, dass die Beabstandung der informationstragenden Pakete in dem erweiterten Strom dieselbe wie die Beabstandung der entsprechenden informationstragenden Pakete in dem empfangenen Strom von informationstragenden Paketen ist.

6. Netzwerkbasierte Kommunikationseinrichtung (10, 13) nach Anspruch 5, konfiguriert jede Lücke in dem Strom (14) von informationstragenden Paketen mit einem oder mehreren Abstandhalterpaketen vollständig zu füllen, wenn der erweiterte Strom (15) von Paketen erzeugt wird.

7. Netzwerkbasierte Kommunikationseinrichtung (10, 13) nach Anspruch 5, konfiguriert Abstandhalterpakete zu erzeugen, die derartige Längen aufweisen, dass es eine konstant große Lücke zwischen jedem Paket in dem erzeugten erweiterten Strom (15) von Paketen gibt.

8. Netzwerkbasierte Kommunikationseinrichtung (10, 13) nach einem der Ansprüche 5 bis 7, konfiguriert weitere informationstragende Pakete, die von der Einrichtung empfangen oder erzeugt werden, in Lücken zwischen angrenzenden Paketen des Stroms (14) von informationstragenden Paketen derart einzusetzen, dass der erweiterte Strom (15) von Paketen umfasst: i) die informationstragenden Pakete; ii) weitere informationstragende Pakete, die zwischen angrenzenden informationstragenden Paketen des Stroms von informationstragenden Paketen liegen; und iii) Abstandhalterpakete, die zwischen angrenzenden informationstragenden Paketen des Stroms von informationstragenden Paketen liegen.

9. Netzwerkbasierte Kommunikationseinrichtung (10, 13) nach Anspruch 8, konfiguriert ein weiteres informationstragendes Paket von einem Speicher in eine Lücke zwischen zwei Paketen des informationstragenden Paketstroms einzusetzen, wenn ein weiteres informationstragendes Paket in dem Speicher verfügbar ist, das in die Lücke passt, und ein Abstandhalterpaket in die Lücke nur einzusetzen, wenn kein solches weiteres informationstragendes Paket verfügbar ist.

10. Netzwerkbasierte Kommunikationseinrichtung (10, 13) nach einem der Ansprüche 5 bis 9, konfiguriert jedes Paket des Stroms (14) von informationstragenden Paketen, das größer als eine vorgegebene konstante Größe ist, in eine Vielzahl von kleineren informationstragenden Paketen zu teilen, und jedes der kleineren informationstragenden Pakete, das kleiner als die vorgegebene konstante Größe ist, auszustaffieren, um die vorgegebene konstante Größe aufzuweisen, wobei die Vielzahl von kleineren informationstragenden Paketen alle die vorgegebene konstante Größe nach jeglichem solchen Ausstaffieren aufweisen, und die Vielzahl von kleineren informationstragenden Paketen in dem erweiterten Strom (15) von Datenpaketen zu beinhalten.

11. Netzwerkbasierte Kommunikationseinrichtung (10, 13) nach einem der Ansprüche 5 bis 10, weiter konfiguriert, jedes Paket des Stroms (14) von informationstragenden Paketen, das kleiner als eine vorgegebene konstante Größe ist, auszustaffieren, um ein ausstaffiertes informationstragendes Paket zu erstellen, und die ausstaffierten informationstragenden Pakete in dem erweiterten Strom (15) von Datenpaketen zu beinhalten.

12. Netzwerkbasiertes Kommunikationssystem (9), umfassend:
eine quellnetzwerkbasierte Kommunikationseinrichtung (10, 13) nach einem der Ansprüche 5 bis 11; und
eine Zielnetzwerkeinrichtung (11),
wobei die Zielnetzwerkeinrichtung konfiguriert ist zum:
Empfangen des erweiterten Stroms (15) von Paketen bei einem Eingang der Zielnetzwerkeinrichtung;
Ermitteln, ob jedes empfangene Paket ein informationstragendes Paket oder ein Abstandhalterpaket ist;
Ausgeben oder Verarbeiten der empfangenen informationstragenden Pakete (17) oder Ausgeben oder Verarbeiten von Informationen von den empfangenen informationstragenden Paketen; und
Verwerfen der empfangenen Abstandhalterpakete.

13. Netzwerkbasiertes Kommunikationssystem (9) nach Anspruch 12, wobei jedes der informationstragenden Pakete Zeitablaufinformationen umfasst und wobei die Zielnetzwerkeinrichtung einen Zwischenspeicher umfasst und konfiguriert ist, den erweiterten Strom (15) von Paketen zwischenzuspeichern und die Zeitablaufinformationen zu verwenden, um Paketverzögerungsschwankung zu kompensieren, wenn die empfangenen informationstragenden Pakete (17) ausgegeben oder verarbeitet werden, oder wenn Informationen von den empfangenen informationstragenden Paketen ausgegeben oder verarbeitet werden.

14. Netzwerkbasiertes Kommunikationssystem (9) nach Anspruch 12 oder 13, wobei die Zielnetzwerkeinrichtung (11) konfiguriert ist, die Position eines oder mehrerer Pakete in dem empfangenen erweiterten Strom (15) von Paketen anzupassen, indem Lücken in dem empfangenen erweiterten Strom von Paketen vergrößert oder verkleinert werden, um die Lücken näher zu, oder gleich zu, einer vorgegebenen konstanten Lückenlänge zu bringen.

15. Netzwerkbasiertes Kommunikationssystem (9) nach einem der Ansprüche 12 bis 14, wobei die quellnetzwerkbasierte Kommunikationseinrichtung (10, 13) eine Uhr umfasst, die Zielnetzwerkeinrichtung (11) eine Uhr umfasst und die Zielnetzwerkeinrichtung konfiguriert ist, die Uhr der Zielnetzwerkeinrichtung mit der Uhr der quellnetzwerkbasierten Kommunikationseinrichtung zu synchronisieren, indem der empfangene erweiterte Strom (15) analysiert wird.

## Revendications

1. Procédé de communication basé sur un réseau, comprenant :
un appareil de réseau source (10, 13) recevant un flux (14) de paquets porteurs d'informations, le flux comprenant des espaces entre au moins certains des paquets porteurs d'informations ;
l'appareil de réseau source générant un ou plusieurs paquets d'espacement et générant un flux augmenté (15) de paquets, le flux augmenté de paquets comprenant des paquets porteurs d'informations et comprenant en outre des paquets d'espacement situés dans au moins certains desdits espaces ;
l'appareil de réseau source délivrant le flux augmenté de paquets à une liaison de réseau (12a) depuis une sortie de l'appareil de réseau source ;
le flux augmenté de paquets voyageant à travers une ou plusieurs liaisons de réseau entre l'appareil de réseau source et un appareil de réseau de destination (11) ;
l'appareil de réseau de destination recevant le flux augmenté de paquets à une entrée de l'appareil de réseau de destination ;
l'appareil de réseau de destination déterminant si chaque paquet reçu est un paquet porteur d'informations ou un paquet d'espacement ;
l'appareil de réseau de destination délivrant ou traitant les paquets porteurs d'informations reçus (17), ou délivrant ou traitant des informations depuis les paquets porteurs d'informations reçus ; et
l'appareil de réseau de destination rejetant les paquets d'espacement reçus ;
**caractérisé par** :
l'appareil de réseau source générant le flux augmenté de paquets de sorte que l'espacement des paquets porteurs d'informations dans le flux augmenté est le même que l'espacement des paquets porteurs d'informations correspondants dans le flux reçu de paquets porteurs d'informations.

2. Procédé de communication basé sur un réseau selon la revendication 1, comprenant l'appareil de réseau source (10, 13) générant des paquets d'espacement présentant des longueurs telles qu'il existe un espace de taille constante entre chaque paquet dans le flux augmenté généré (15) de paquets.

3. Procédé de communication basé sur un réseau selon la revendication 1 ou 2, comprenant l'appareil de réseau source (10, 13) insérant d'autres paquets porteurs d'informations, reçus ou générés par l'appareil de réseau source, dans des espaces entre des paquets adjacents du flux (14) de paquets porteurs d'informations, de sorte que le flux augmenté (15) de paquets comprend : i) les paquets porteurs d'informations ; ii) d'autres paquets porteurs d'informations situés entre des paquets porteurs d'informations adjacents du flux de paquets porteurs d'informations ; et iii) des paquets d'espacement situés entre des paquets porteurs d'informations adjacents du flux de paquets porteurs d'informations.

4. Procédé de communication basé sur un réseau selon une quelconque revendication précédente, comprenant l'appareil de réseau source (10, 13) divisant chaque paquet du flux (14) de paquets porteurs d'informations qui est plus grand qu'une taille constante prédéterminée en une pluralité de paquets porteurs d'informations plus petits, et le remplissage de tous les paquets porteurs d'informations plus petits qui sont inférieurs à la taille constante prédéterminée pour présenter la taille constante prédéterminée, dans lequel la pluralité de paquets porteurs d'informations plus petits présentent tous la taille constante prédéterminée après un tel remplissage, et incluant la pluralité de paquets porteurs d'informations plus petits dans le flux augmenté (15) de paquets de données.

5. Appareil de communication basé sur un réseau (10, 13) configuré pour :
recevoir un flux (14) de paquets porteurs d'informations, le flux comprenant des espaces entre au moins certains des paquets porteurs d'informations ;
générer un ou plusieurs paquets d'espacement et pour générer un flux augmenté (15) de paquets, le flux augmenté de paquets comprenant des paquets porteurs d'informations et comprenant en outre des paquets d'espacement situés dans au moins certains des espaces ; et
délivrer le flux augmenté de paquets à une liaison de réseau (12a) depuis une sortie de l'appareil de communication basé sur un réseau ;
**caractérisé en ce que** :
l'appareil est configuré pour générer le flux augmenté de paquets de sorte que l'espacement des paquets porteurs d'informations dans le flux augmenté est le même que l'espacement des paquets porteurs d'informations correspondants dans le flux reçu de paquets porteurs d'informations.

6. Appareil de communication basé sur un réseau (10, 13) selon la revendication 5, configuré pour remplir complètement chaque espace dans le flux (14) de paquets porteurs d'informations avec un ou plusieurs paquets d'espacement lors de la génération du flux augmenté (15) de paquets.

7. Appareil de communication basé sur un réseau (10, 13) selon la revendication 5, configuré pour générer des paquets d'espacement présentant des longueurs telles qu'il existe un espace de taille constante entre chaque paquet dans le flux augmenté généré (15) de paquets.

8. Appareil de communication basé sur un réseau (10, 13) selon l'une quelconque des revendications 5 à 7, configuré pour insérer d'autres paquets porteurs d'informations, reçus ou générés par l'appareil, dans des espaces entre des paquets adjacents du flux (14) de paquets porteurs d'informations, de sorte que le flux augmenté (15) de paquets comprend : i) les paquets porteurs d'informations ; ii) d'autres paquets porteurs d'informations situés entre des paquets porteurs d'informations adjacents du flux de paquets porteurs d'informations ; et iii) des paquets d'espacement situés entre des paquets porteurs d'informations adjacents du flux de paquets porteurs d'informations.

9. Appareil de communication basé sur un réseau (10, 13) selon la revendication 8, configuré pour insérer un autre paquet porteur d'informations provenant d'une mémoire dans un espace entre deux paquets du flux de paquets porteurs d'informations lorsqu'il existe un autre paquet porteur d'informations disponible dans la mémoire qui s'adaptera à l'espace, et pour insérer un paquet d'espacement dans l'espace uniquement lorsqu'aucun autre paquet porteur d'informations n'est disponible.

10. Appareil de communication basé sur un réseau (10, 13) selon l'une quelconque des revendications 5 à 9, configuré pour diviser chaque paquet du flux (14) de paquets porteurs d'informations qui est plus grand qu'une taille constante prédéterminée en une pluralité de paquets porteurs d'informations plus petits, et pour remplir tous les paquets porteurs d'informations plus petits qui sont inférieurs à la taille constante prédéterminée pour présenter la taille constante prédéterminée, dans lequel la pluralité de paquets porteurs d'informations plus petits présentent tous la taille constante prédéterminée après un tel remplissage, et pour inclure la pluralité de paquets porteurs d'informations plus petits dans le flux augmenté (15) de paquets de données.

11. Appareil de communication basé sur un réseau (10, 13) selon l'une quelconque des revendications 5 à 10, configuré en outre pour remplir chaque paquet du flux (14) de paquets porteurs d'informations qui est plus petit qu'une taille constante prédéterminée pour créer un paquet porteur d'informations rempli, et inclure les paquets porteurs d'informations remplis dans le flux augmenté (15) de paquets de données.

12. Système de communication basé sur un réseau (9), comprenant :
un appareil de communication basé sur un réseau source (10, 13) selon l'une quelconque des revendications 5 à 11 ; et
un appareil de réseau de destination (11),
dans lequel l'appareil de réseau de destination est configuré pour :
recevoir le flux augmenté (15) de paquets à une entrée de l'appareil de réseau de destination ;
déterminer si chaque paquet reçu est un paquet porteur d'informations ou un paquet d'espacement ;
délivrer ou traiter les paquets porteurs d'informations reçus (17), ou délivrer ou traiter des informations depuis les paquets porteurs d'informations reçus ; et
ignorer les paquets d'espacement reçus.

13. Système de communication basé sur un réseau (9) selon la revendication 12, dans lequel chacun des paquets porteurs d'informations comprend des informations de temporisation, et dans lequel l'appareil de réseau de destination comprend un tampon et est configuré pour mettre en tampon le flux augmenté (15) de paquets et utiliser les informations de temporisation pour compenser la variation du retard des paquets lors de la sortie ou du traitement des paquets porteurs d'informations reçus (17), ou lors de la sortie ou du traitement des informations à partir des paquets porteurs d'informations reçus.

14. Système de communication basé sur un réseau (9) selon la revendication 12 ou 13, dans lequel l'appareil de destination de réseau (11) est configuré pour ajuster la position d'un ou plusieurs des paquets dans le flux augmenté reçu (15) des paquets en augmentant ou en diminuant les espaces dans le flux augmenté reçu de paquets de façon à rendre les espaces plus proches ou égaux à une longueur d'espace constante prédéterminée.

15. Système de communication basé sur un réseau (9) selon l'une quelconque des revendications 12 à 14, dans lequel l'appareil de communication basé sur un réseau source (10, 13) comprend une horloge, l'appareil de réseau de destination (11) comprend une horloge, et l'appareil de réseau de destination est configuré pour synchroniser l'horloge de l'appareil de réseau de destination avec l'horloge de l'appareil de communication basé sur un réseau source en analysant le flux augmenté reçu (15).
